# EUROPÄISCHE PATENTSCHRIFT

(11) **EP 1 075 738 B1**
(45) Veröffentlichungstag und Bekanntmachung des Hinweises auf die Patenterteilung: **20.03.2002**
(21) Anmeldenummer: 98942499.9
(22) Anmeldetag: 07.07.1998
(51) Int. Cl.: H04B 7/26

(54) **DATENÜBERTRAGUNG MIT UNTERBRECHUNGSPHASEN**
DATA TRANSFER WITH INTERRUPTION PHASES
TRANSFERT DE DONNEES COMPORTANT DES PHASES D'INTERRUPTION

(30) Priorität: 28.04.1998 DE 19818984; 28.04.1998 US 83099 P
(43) Veröffentlichungstag der Anmeldung: 14.02.2001
(73) Patentinhaber: SIEMENS AKTIENGESELLSCHAFT, 80333 München (DE)
(72) Erfinder: RAAF, Bernhard, D-82475 München (DE)
(86) Internationale Anmeldenummer: DE9801870
(87) Internationale Veröffentlichungsnummer: WO9956410

(56) Entgegenhaltungen:
- WO-A-94/29981
- WO-A-97/25827
- GB-A- 2 297 460
- PATENT ABSTRACTS OF JAPAN vol. 011, no. 231 (E-527), 28. Juli 1987 & JP 62 047236 A (NEC CORP), 28. Februar 1987

## Beschreibung

Die Erfindung betrifft ein Verfahren zur Datenübertragung in einem Kommunikationssystem, insbesondere in einem CDMA-Mobil-funksystem, wobei die Daten strukturiert in Rahmen übertragen werden und wobei eine Sendestation die Daten derart sendet, daβ es einer die Daten empfangenden Empfangsstation möglich ist, während einer oder mehrerer Unterbrechungsphasen, in der bzw. in denen sie das Empfangen und/oder das Verarbeiten empfangener Daten unterbricht, andere Funktionen auszuführen, insbesondere über eine Empfangseinrichtung Messungen durchzuführen. Die Erfindung betrifft weiterhin die Verwendung einer Sendestation, insbesondere der Basisstation eines Mobilfunknetzes, und die Verwendung einer Empfangsstation, insbesondere der Mobilstation eines Mobilfunknetzes, für die Durchführung eines solchen Verfahrens.

In Kommunikationssystemen werden Daten (beispielsweise Sprachdaten, Bilddaten oder Systemdaten) auf Übertragungsstrecken zwischen Sendestationen und Empfangsstationen übertragen. Bei Funk-Kommunikationssystemen erfolgt dies mit Hilfe von elektromagnetischen Wellen über eine Luft- oder Funkschnittstelle. Dabei werden Trägerfrequenzen genutzt, die in dem für das jeweilige System vorgesehenen Frequenzband liegen. Beim GSM (Global System for Mobile Communication) liegen die Trägerfrequenzen im Bereich von 900 MHz. Für zukünftige Funk-Kommunikationssysteme, beispielsweise das UMTS (Universal Mobile Telecommunication System) oder andere Systeme der dritten Generation sind Frequenzen im Frequenzband von 2.000 MHz vorgesehen.

Insbesondere in Abwärtsrichtung eines zellular aufgebauten mobilen Funk-Kommunikationssystems, das heißt in der Richtung von einer Basisstation zu einer Mobilstation, wird von der Sendestation im wesentlichen kontinuierlich gesendet. Die beim Senden übertragenen Daten sind üblicherweise in Rahmen strukturiert, die jeweils eine vorgegebene Länge haben. Insbesondere bei unterschiedlichen Diensten, wie Sprachdatenübertragung und Videodatenübertragung, können die Rahmen auch unterschiedliche Struktur und Länge haben. Die Struktur und/oder Länge jedes Rahmens in einer kontinuierlichen Folge von Rahmen ist jedoch vorgegeben und/oder wird durch die Empfangsstation erkannt. In jedem Fall ist die Grenze zwischen zwei aufeinanderfolgenden Rahmen eindeutig definiert.

In Kommunikationssystemen, in denen im wesentlichen kontinuierlich zwischen einer Sendestation und einer Empfangsstation gesendet wird, muß die Empfangsstation gelegentlich auch andere Funktionen als Datenempfang ausführen, die zumindest beim Betrieb nur einer einzigen Empfangseinrichtung nicht gleichzeitig ausgeführt werden können. Insbesondere muß die Mobilstation in einem zellular aufgebauten mobilen Funk-Kommunikationssystem, in dem die Basisstationen verschiedener Zellen auf unterschiedlichen Frequenzen senden, von Zeit zu Zeit messen, ob sie Funksignale von einer anderen Basisstation mit guter Empfangsqualität empfangen kann. Hierzu stellt die Mobilstation ihre Empfangseinrichtung auf eine andere Frequenz als die Frequenz ein, auf der sie momentan Daten empfängt. Um ohne Unterbrechung von der Basisstation zu der Mobilstation senden zu können, wurde bereits vorgeschlagen, die Mobilstation mit einer zweiten Empfangseinrichtung auszustatten. Aus Kostengründen wird diese Lösung in der Praxis jedoch meist abgelehnt.

Aus der Arbeit der Concept Group Alpha, die sich mit der Erarbeitung einer Norm für zukünftige Funk-Kommunikationssysteme der dritten Generation beschäftigt, ist ein anderer Vorschlag bekannt. In dem Dokument ETSI SMG II UMTS Ad Hoc, Tdoc SMGII UMPS 111/97, Helsiki, Finnland, 17. bis 21. November 1997, Evaluation Document 2.0 (kurz Evaluation Document), Teil 1: System Description, Performance Evaluation, Chapter 2.6.5 Handover, ist bekannt, daß die Sendestation das Senden zu vorgegebenen Zeiten unterbricht, um es der Empfangstation zu ermöglichen, eine Nachbarkanalsuche über ihre einzige Empfangseinrichtung durchzuführen. Um einen Datenverlust zu vermeiden, sendet die Basisstation (Sendestation) die Daten zuvor mit einer höheren Senderate als mit der im wesentlichen konstanten Dauer-Senderate. Damit dies nicht zu höheren Bitfehlerraten (BER) führt, muß zusätzlich während dieser Zeit die Sendeleistung erhöht werden. Mit steigender Sendeleistung werden jedoch die Interferenzeffekte, insbesondere bei anderen Nutzern des Kommunikationssystems verstärkt, was dort zu höheren Bitfehlerraten führt. Deshalb ist man bestrebt, die Komprimierung der Daten und die Erhöhung der Sendeleistung möglichst klein zu wählen und dafür über einen längeren Zeitraum, beispielsweise über den Sendezeitraum von mehreren aufeinanderfolgenden Rahmen, zu strecken. Dabei werden die Daten, die über den gestreckten Zeitraum mit erhöhter Senderate gesendet werden, gemeinsam codiert und einander überlagert gesendet. Als Ergebnis können die Daten dieser sogenannten Überlagerungsspanne erst dann vollständig decodiert werden, wenn alle Daten der Überlagerungsspanne bei der Empfangseinrichtung eingetroffen sind. Dies zieht dementsprechende Verzögerungen nach sich, die nicht bei allen Anwendungen, insbesondere nicht bei Sprachübertragung, tolerierbar sind.

In dem Evaluation Document ist noch eine weitere Möglichkeit beschrieben, wie eine Unterbrechungsphase durch Variieren der Sendeparameter ermöglicht werden kann. Es ist bekannt, die Daten mit einem Redundanzfaktor redundant zu senden, das heißt bei der digitalen Datenübertragung mehr Bits zu übertragen als für die Codierung der Daten unbedingt erforderlich ist. Damit kann insbesondere eine ausreichende Übertragungsqualität gewährleistet werden. Es wird vorgeschlagen, den Redundanzfaktor der Daten, die vor der Unterbrechungsphase gesendet werden, zu erniedrigen, wobei wie auch bei dem vorstehend beschriebenen Vorschlag die Datenübertragungsrate des Rahmens unmittelbar vor der Unterbrechungsphase beziehungsweise die mittlere Datenübertragungsrate in der Überlagerungsspanne unmittelbar vor der Unterbrechungsphase gleich der auch sonst verwendeten Datenübertragungsrate ist. Auch dieser Vorschlag führt jedoch abhängig von dem Grad der Reduktion des Redundanzfaktors zu einer schlechteren Empfangsqualität und/oder zu größeren Verzögerungen bei der Decodierung der empfangenen Daten.

Es ist auch bekannt, das Senden von Daten während periodisch wiederkehrender Unterbrechungsphasen zu unterbrechen. Die Frequenz, mit der die Unterbrechungsphasen wiederkehren, und die Länge der Unterbrechungsphasen hängen von dem jeweiligen System und auch von dem jeweiligen Betriebszustand des Systems ab. Beispielsweise reichen für eine Nachbarkanalsuche einer Mobilstation in einem zellular organisierten Funk-Kommunikationssystem Unterbrechungsphasen mit jeweils einer Länge von jeweils 5 bis 6 ms aus. In Systemen mit HCS (Hierarchic Cell Structure) ist es ausreichend, eine Unterbrechungsphase etwa alle 100 ms stattfinden zu lassen.

Aufgabe der vorliegenden Erfindung ist es, ein Verfahren zur Datenübertragung der eingangs genannten Art anzugeben, das bei akzeptabler Verzögerung der Auswertung empfangener Daten in der Empfangsstation eine oder mehrere Unterbrechungsphasen erlaubt, wobei die Qualität der Datenübertragung in dem Kommunikationssystem möglichst wenig beeinträchtigt werden soll.

Die Aufgabe wird durch ein Verfahren mit den Merkmalen des Patentanspruchs 1 gelöst. Weiterbildungen sind Gegenstand der abhängigen Ansprüche. Die Verwendung einer Sendestation und einer Empfangsstation für die Durchführung des Verfahrens wird in Patentanspruch 12 bzw. 13 beansprucht.

Ein Kerngedanke der Erfindung liegt darin, daß zumindest eine einzelne durchgehende Unterbrechungsphase sich über mindestens Teilabschnitte von wenigstens zwei aufeinander folgenden Rahmen erstreckt. Unter Abschnitt eines Rahmens wird u.a. ein zeitlicher Abschnitt einer Unterbrechungsphase verstanden, in dem beispielsweise aufgrund der Komprimierung von Daten, die vor und/oder nach der Unterbrechungsphase empfangen werden, keine Daten empfangen werden müssen. Die vorher und/oder nachher empfangenen Daten reichen für die bei der Übertragung geforderte Qualität aus. Insbesondere wenn die Rahmen zur eigentlichen Datenübertragung eine fest vorgegebene Sendezeitdauer haben und/oder wenn in einer Folge von Rahmen eine Folge von den Rahmen zugeordneten Sendezeitabschnitten vorgegeben ist, sind die zeitlichen Grenzen zwischen den Rahmen eindeutig vorgegeben. Die Erfindung ist jedoch nicht auf Kommunikationssysteme beschränkt, in denen die zeitliche Grenze aufeinanderfolgender Rahmen vorgegeben ist. Beispielsweise kann das Ende und/oder der Anfang der tatsächlich innerhalb eines Rahmens gesendeten Daten anhand einer Datenkopfinformation und/oder anhand spezieller Signalisierungsbits erkannt werden.

Ein wesentlicher Vorteil der Erfindung liegt darin, daß die Abschnitte bzw. Teile der Unterbrechungsphase in den einzelnen Rahmen kurz bzw. klein gehalten werden können, so daß die Wahrscheinlichkeit für einen Nichtempfang redundant gesendeter Daten aufgrund von Übertragungsstörungen gering ist.

Ein weiterer Vorteil der Erfindung ist, daß die Komprimierung von Daten auf die Zeit vor und auf die Zeit nach der Unterbrechungsphase verteilt werden kann. Der Komprimierungsfaktor ist somit zum Beispiel bei gleicher Länge der Unterbrechungsphase gegenüber dem Stand der Technik kleiner, wobei trotz einer Streckung der Komprimierung über einen längeren Zeitraum eine höhere Verzögerung bei der Auswertung von miteinander verwürfelten Daten vermieden werden kann.

Die Abschnitte, über die sich die Unterbrechungsphase in den wenigstens zwei aufeinanderfolgenden Rahmen erstreckt, werden je nach Aufbau und Struktur der aufeinanderfolgenden Rahmen und abhängig von der erforderlichen Länge der Unterbrechungsphase gewählt. Vorzugsweise erstreckt sich die zumindest eine Unterbrechungsphase über die Grenze zwischen einem ersten Rahmen und einem zweiten Rahmen hinweg, wobei in dem ersten Rahmen vor der Unterbrechungsphase und in dem zweiten Rahmen nach der Unterbrechungsphase Daten empfangen und/oder verarbeitet werden, das heißt die Unterbrechungsphase erstreckt sich jeweils nur über einen Teilabschnitt des ersten und des zweiten Rahmens. Bei Kommunikationssystemen mit fest vorgegebener Datenübertragunsrate pro Rahmen kann die Unterbrechungsphase insgesamt somit gleich oder größer als die Länge eines Rahmens sein, wobei dennoch nur die Daten jeweils eines Teilabschnitts des ersten und des zweiten Rahmens vor beziehungsweise nach der Unterbrechungsphase zusammen mit anderen Daten komprimiert gesendet werden müssen.

Bei einer Weiterbildung werden die Daten mit einer im wesentlichen konstanten Dauer-Senderate gesendet, wobei zumindest die unmittelbar vor und unmittelbar nach der zumindest einen Unterbrechungsphase empfangenen Daten jeweils mit einer im Vergleich zu der Dauer-Senderate höheren Senderate gesendet werden. Alternativ oder zusätzlich werden die Daten mit einem im wesentlichen konstanten Standard-Redundanzfaktor redundant gesendet, wobei zumindest die unmittelbar vor und unmittelbar nach der zumindest einen Unterbrechungsphase empfangenen Daten jeweils mit einem im Vergleich zu dem Standard-Redundanzfaktor niedrigeren Redundanzfaktor gesendet werden. Insbesondere bei der Sprachdatenübertragung werden die unmittelbar vor und unmittelbar nach der zumindest einen Unterbrechungsphase empfangenen Daten vorzugsweise jeweils nur in den Grenzen eines einzigen Rahmens mit der jeweiligen höheren Senderate und/oder mit dem jeweiligen niedrigeren Redundanzfaktor gesendet.

In Kommunikationssystemen, in denen die Daten über eine Überlagerungsspanne mit einer im wesentlichen fest vorgegebenen Überlagerungslänge hinweg mit jeweils vorher und/oder nachher zu übertragenden Daten gemeinsam codiert und einander überlagert gesendet werden, werden die unmittelbar vor und unmittelbar nach der zumindest einen Unterbrechungsphase empfangenen Daten vorzugsweise jeweils über weniger als eine Überlagerungslänge hinweg mit der jeweiligen höheren Senderate und/oder mit dem jeweiligen niedrigeren Redundanzfaktor gesendet. Die Überlagerungslänge kann kleiner, gleich oder größer als die Länge eines Rahmens sein.

Bei einer besonders bevorzugten Ausführungsform werden die unmittelbar vor und unmittelbar nach der zumindest einen Unterbrechungsphase empfangenen Daten mit derselben höheren Senderate und/oder mit demselben niedrigeren Redundanzfaktor gesendet. Der Komprimierungsfaktor vor und nach.der Unterbrechungsphase ist somit gleich, so daß Interferenzeffekte aufgrund höherer Sendeleistung weitestgehend eingeschränkt beziehungsweise vermieden werden können.

Insbesondere in Kommunikationssystemen, in denen die zumindest eine Unterbrechungsphase in zwei gleich langen aufeinanderfolgenden Rahmen liegt, erstreckt sich die zumindest eine Unterbrechungsphase vorzugsweise über gleich große Teilabschnitte der zwei aufeinanderfolgenden Rahmen.

Bekannt sind Kommunikationssysteme, in denen die Empfangsstation während einer Mehrzahl von Unterbrechungsphasen das Empfangen und/oder Verarbeiten von Daten unterbricht. Die Unterbrechungsphasen können beispielsweise in gleichbleibend wiederkehrenden Zeitabständen in zumindest einem übergeordneten Multirahmen verteilt sein, welcher eine Mehrzahl der einzelnen Rahmen zur Datenübertragung umfaßt, und/oder sie können sich wiederkehrend jeweile an gleicher Position eines von mehreren Multirahmen erstrecken, welche jeweils eine vorgegebene Anzahl der einzelnen Rahmen umfassen. Vorzugsweise sind in solchen Systemen alle diese Unterbrechungsphasen erfindungsgemäße Unterbrechungsphasen, die sich über mindestens Teilabschnitte von wenigstens zwei aufeinander folgenden Rahmen erstrecken.

Anhand der Zeichnung werden nun zwei Ausführungsbeispiele der Erfindung näher beschrieben. Die Erfindung ist jedoch nicht auf diese Ausführungsbeispiele beschränkt. Die einzelnen Figuren der Zeichnung zeigen:
- Fig. 1: ein erstes Ausführungsbeispiel mit Unterbrechungsphasen bei einer Übertragung eines Dienstes mit geringer Verzögerungszeit und
- Fig. 2: ein zweites Ausführungsbeispiel, mit einer unterbrochenen Datenübertragung bei einem Dienst mit einer Verzögerungs- bzw. Verwürfelungszeit, die sich über meherere Rahmen erstreckt.

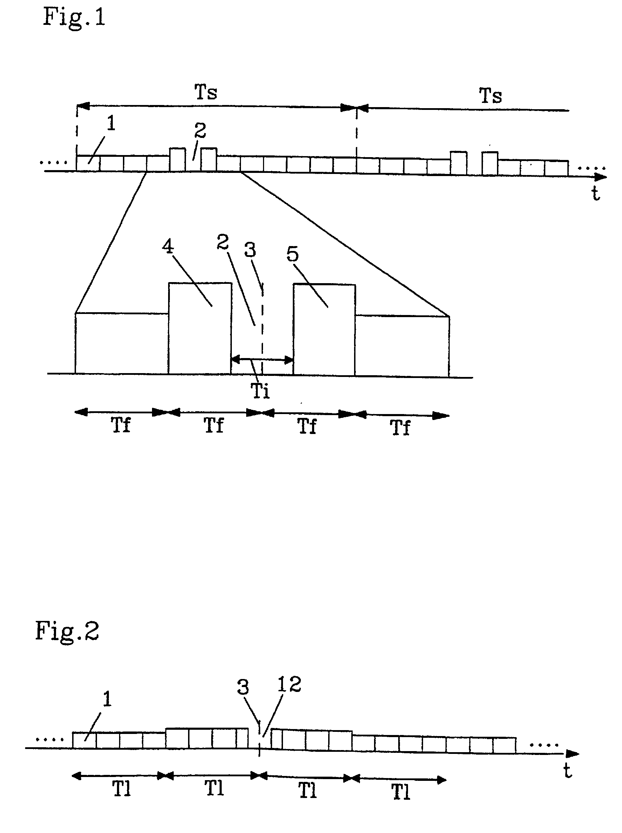

Fig. 1 zeigt die Rahmenstruktur eines Dienstes mit geringer Verzögerungszeit, insbesondere der Sprachübertragung in einem UMTS (Universal Mobile Telecommunication System), in dem jeweils innerhalb eines Multirahmens zwölf einzelne Rahmen 1 zur Datenübertragung enthalten sind. Die einzelnen Rahmen 1 haben jeweils eine Sendelänge Tf von 10 ms, so daß der Multirahmen insgesamt eine Sendelänge Ts von 120 ms hat. Jeweils der fünfte und der sechste einzelne Rahmen 1 weisen eine gemeinsame, ihre Rahmengrenze 3 überlappende Unterbrechungsphase 2 auf, die eine Länge Ti hat. Die Länge Ti beträgt beispielsweise 6 ms. Die Teilabschnitte des ersten Rahmens 4, der vor der Unterbrechungsphase 2 beginnt, und des zweiten Rahmens 5, der nach der Unterbrechungsphase 2 endet, sind gleich lang beziehungsweise gleich groß.

Bei dem in Fig. 1 gezeigten Ausführungsbeispiel werden Sprachdaten übertragen, so daß eine maximale Verzögerung bei der Auswertung der von der Empfangsstation empfangenen Daten in Höhe von 10 ms, das heißt eine Rahmenlänge Tf, akzeptabel ist. Die Daten innerhalb eines Rahmens sind jeweils miteinander verwürfelt, das heißt sie werden gemeinsam codiert und einander überlagert gesendet. Im Ausführungsbeispiel werden die Senderate des ersten Rahmens 4 und des zweiten Rahmens 5 jeweils derart erhöht, daß die gleiche Menge von zu sendenden Informationen, die in nicht komprimierten Rahmen 1 über die Rahmenlänge Tf hinweg gesendet werden, in einem Zeitraum Tc = Tf - Ti/2 gesendet werden. Im Vergleich zum Stand der Technik, bei dem die gesamte Unterbrechungsphase in einem Rahmen liegt, fällt die Erhöhung der Senderate somit wesentlich geringer aus, nämlich um einen Faktor 2 geringer. Während der mit geringer Verzögerungszeit bei ihr eintreffenden bzw. eintretenden Unterbrechungsphase 2 unterbricht die Empfangsstation das Empfangen von Daten und führt über eine Empfangseinrichtung eine Nachbarkanalsuche durch, indem sie die Empfangseinrichtung auf einen Nachbarkanal abzustimmen versucht.

In Fig. 2 ist die Rahmenstruktur eines Dienstes mit einer Verzögerungszeit bzw. Verwürfelungszeit gezeigt, die sich über mehrere Rahmen erstreckt. Die einzelnen, aufeinander folgenden Rahmen 1 sind zu nicht dargestellten Multirahmen mit jeweils mehreren einzelnen Rahmen 1 zusammengefaßt. Die Multirahmen haben jeweils eine Sendelänge von 120 ms. Bei dem in Fig. 2 gezeigten Ausführungsbeispiel erstreckt sich die Verwürfelungs- beziehungsweise Überlagerungsspanne über jeweils vier einzelne Rahmen. Optimal kann die Verwürfelung gleitend erfolgen, das heißt die zu übertragenden Daten sind gleitend mit den jeweils vorher und nachher zu übertragenden Daten gemeinsam codiert und einander überlagert. Die in Fig. 2 gezeigte diskrete Aneinanderreihung von einzelnen Überlagerungsspannen der Überlagerungslänge T1 ist also nur schematisch, jeweils bezogen auf die Mitte bzw. das Ende der Überlagerungsspannen zu verstehen. Die schematische Darstellung dient lediglich zur Erläuterung der Datenkompression, die durch die Unterbrechungsphase 12 bedingt ist.

Die Unterbrechungsphase 12 erstreckt sich über die Grenze 3 zwischen zwei einzelnen Rahmen. Die zu übertragenden Daten werden mit einem im wesentlich konstanten Standard-Redundanzfaktor redundant gesendet. Um die Übertragungsrate der Daten auch im Bereich der Unterbrechungsphase 12 im zeitlichen Mittel über die gezeigten Überlagerungslängen Tl hinweg konstant halten zu können, werden die Daten jeweils über eine Überlagerungsspanne der Länge Tl vor und nach der Grenze 3 mit niedrigerem Redundanzfaktor gesendet. Die Höhe der dargestellten Rahmen entspricht dabei, wie auch in Fig. 1, etwa der momentanen Übertragungsrate. Auf diese Weise kann die Unterbrechungsphase 12, beispielsweise für die Detektierung eines FCCH (Frequency Correction Channel) und eines SCH (Synchronisation Channel) einer Nachbar-Sendestation nach dem GSM (Global System for Mobile Communication)-Standard oder für die Synchronisation mit einem Nachbarkanal in einem UMTS genutzt werden. Die Länge der Unterbrechungsphase 12 beträgt beispielsweise 5 ms.

## Patentansprüche

1. Verfahren zur Datenübertragung in einem Kommunikationssystem, insbesondere in einem CDMA-Mobilfunksystem, wobei die Daten strukturiert in Rahmen (1, 4, 5) übertragen werden und wobei eine Sendestation die Daten mit Unterbrechungsphasen derart sendet, daß es einer die Daten empfangenden Empfangsstation möglich ist, während einer oder mehrerer dieser Unterbrechungsphasen (2, 12), in der bzw. in denen sie das Empfangen und/oder das Verarbeiten empfangener Daten unterbricht, andere Funktionen auszuführen, insbesondere über eine Empfangseinrichtung Messungen durchzuführen,
**dadurch gekennzeichnet,daß**
zumindest eine einzelne durchgehende Unterbrechungsphase (2, 12) sich über mindestens Teilabschnitte von wenigstens zwei aufeinanderfolgenden Rahmen (4, 5) erstreckt.

2. Verfahren nach Anspruch 1,
**dadurch gekennzeichnet, daß**
die zumindest eine Unterbrechungsphase (2, 12) sich über die Grenze (3) zwischen einem ersten Rahmen (4) und einem zweiten Rahmen (5) hinweg erstreckt, wobei in dem ersten Rahmen (4) vor der Unterbrechungsphase (2, 12) und in dem zweiten Rahmen (5) nach der Unterbrechungsphase (2, 12) Daten gesendet werden.

3. Verfahren nach Anspruch 1 oder 2,
wobei die Daten mit einer im wesentlichen konstanten Dauer-Senderate gesendet werden,
**dadurch gekennzeichnet, daß**
zumindest die unmittelbar vor und unmittelbar nach der zumindest einen Unterbrechnungsphase (2) empfangenen Daten jeweils mit einer im Vergleich zu der Dauer-Senderate höheren Senderate gesendet werden.

4. Verfahren nach einem der Ansprüche 1 bis 3,
wobei die Daten mit einem im wesentlichen konstanten Standard-Redundanzfaktor redundant gesendet werden,
**dadurch gekennzeichnet, daß**
zumindest die unmittelbar vor und unmittelbar nach der zumindest einen Unterbrechungsphase (12) empfangenen Daten mit einem im Vergleich zu dem Standard-Redundanzfaktor niedrigeren Redundanzfaktor gesendet werden.

5. Verfahren nach Anspruch 3 oder 4,
**dadurch gekennzeichnet, daß**
die unmittelbar vor und unmittelbar nach der zumindest einen Unterbrechungsphase (2) empfangenen Daten jeweils nur in den Grenzen eines einzigen Rahmens (4, 5) mit der jeweiligen höheren Senderate und/oder mit dem jeweiligen nierigeren Redundanzfaktor gesendet werden.

6. Verfahren nach einem der Ansprüche 3 bis 5,
wobei die Daten über eine Überlagerungsspanne mit einer im wesentlichen fest vorgegebenen Überlagerungslänge (Tl) hinweg mit jeweils vorher und/oder nachher zu übertragenden Daten gemeinsam codiert und einander überlagert gesendet werden,
**dadurch gekennzeichnet, daß**
die unmittelbar vor und unmittelbar nach der zumindest einen Unterbrechungsphase (12) empfangenen Daten jeweils über weniger als eine Überlagerungslänge (Tl) hinweg mit der jeweiligen höheren Senderate und/oder mit dem jeweiligen niedrigeren Redundanzfaktor gesendet werden.

7. Verfahren nach einem der Ansprüche 3 bis 6,
**dadurch gekennzeichnet, daß**
die unmittelbar vor und die unmittelbar nach der zumindest einen Unterbrechungsphase (2, 12) empfangenen Daten mit derselben höheren Senderate und/oder mit demselben niedrigeren Redundanzfaktor gesendet werden.

8. Verfahren nach einem der Ansprüche 1 bis 7,
**dadurch gekennzeichnet, daß**
die zumindest eine Unterbrechungsphase (2, 12) sich über gleich große Teilabschnitte der zwei aufeinanderfolgenden Rahmen (4, 5) erstreckt.

9. Verfahren nach einem der Ansprüche 1 bis 8,
wobei die Empfangsstation während einer Mehrzahl der einzelnen durchgehenden Unterbrechungsphasen das Empfangen und/oder das Verarbeiten der Daten unterbricht,
**dadurch gekennzeichnet, daß**
die Unterbrechungsphasen in gleichbleibend wiederkehrenden Zeitabständen in zumindest einem übergeordneten Multirahmen verteilt sind, welcher eine Mehrzahl der Rahmen umfaßt.

10. Verfahren nach einem der Ansprüche 1 bis 9, wobei die Empfangsstation während einer Mehrzahl der einzelnen durchgehenden Unterbrechungsphasen (2) das Empfangen und/oder das Verarbeiten der Daten unterbricht,
**dadurch gekennzeichnet, daß**
sich die Unterbrechungsphasen (2) wiederkehrend jeweils an gleicher Position eines von mehreren Multirahmen erstrecken, welche jeweils eine vorgegebene Anzahl der Rahmen umfassen.

11. Verfahren nach einem der Ansprüche 1 bis 10,
**dadurch gekennzeichnet,**
**daß** die Sendestation das Senden von Daten derart unterbricht,
**daß** während der zumindest einen Unterbrechnungsphase (2, 12) keine von ihr gesendeten Daten an der Empfangsstation eintreffen.

12. Empfangsstation für die Durchführung des Verfahrens nach einem der Ansprüche 1 bis 11,
wobei die Empfangsstation derart ausgestaltet ist, daß der Empfang und/oder die Verarbeitung von Daten, die in Rahmen (1, 4, 5) strukturiert zu ihr übertragen werden, während einer oder mehrerer Unterbrechnungsphasen (2, 12) der Übertragung unterbrechbar ist, wobei sich zumindest eine einzelne durchgehende Unterbrechnungsphase (2, 12) über mindestens Teilabschnitte von wenigstens zwei aufeinander folgenden Rahmen (4, 5) erstreckt.

13. Sendestation für die Durchführung eines Verfahrens nach einem der Ansprüche 1 bis 11,
wobei die Sendestation derart ausgestaltet ist, daß in Rahmen (1, 4, 5) strukturierte Daten in der Weise sendbar sind, daß es einer die Daten empfangenden Empfangsstation möglich ist, während zumindest einer einzelnen durchgehenden'Unterbrechungsphase (2, 12), die sich über mindestens Teilabschnitte von wenigstens zwei aufeinander folgenden Rahmen (4, 5) erstreckt, das Empfangen und/oder Verarbeiten von Daten zu unterbrechen.

## Claims

1. Method for data transmission in a communication system, especially in a CDMA mobile radio system, wherein the data are transmitted structured in frames (1, 4, 5) and a transmitting station transmits the data with interruption phases in such a manner that a receiving station receiving the data is able to perform other functions, especially to carry out measurements via a receiving device, during one or more of said interruption phases (2, 12) in which it interrupts the reception and/or the processing of received data, **characterized in that** at least one individual continuous interruption phase (2, 12) extends over at least part-sections of at least two successive frames (4, 5).

2. Method according to Claim 1, **characterized in that** the at least one interruption phase (2, 12) extends over the boundary (3) between a first frame (4) and a second frame (5), wherein data are transmitted in the first frame (4) before the interruption phase (2, 12) and in the second frame (5) after the interruption phase (2, 12).

3. Method according to Claim 1 or 2, wherein the data are transmitted at an essentially constant permanent transmitting rate, **characterized in that** at least the data received immediately preceding and immediately following the at least one interruption phase (2) are in each case transmitted at a transmitting rate which is higher than the permanent transmitting rate.

4. Method according to one of Claims 1 to 3, wherein the data are transmitted redundantly with an essentially constant standard redundancy factor, **characterized in that** at least the data received immediately preceding and immediately following the at least one interruption phase (12) are transmitted with a redundancy factor which is lower than the standard redundancy factor.

5. Method according to Claim 3 or 4, **characterized in that** the data received immediately preceding and immediately following the at least one interruption phase (2) are in each case only transmitted within the boundaries of a single frame (4, 5) at the respective higher transmitting rate and/or with the respective lower redundancy factor.

6. Method according to one of Claims 3 to 5, wherein the data are coded jointly with the data in each case to be transmitted before and/or afterward, over a superposition period having an essentially predetermined superposition length (Tl) and are transmitted superimposed upon one another, **characterized in that** the data received immediately preceding and immediately following the at least one interruption phase (12) are in each case transmitted over less than one superposition length (Tl) at the respective higher transmitting rate and/or with the respective lower redundancy factor.

7. Method according to one of Claims 3 to 6, **characterized in that** the data received immediately preceding and immediately following the at least one interruption phase (2, 12) are transmitted at the same higher transmitting rate and/or with the same lower redundancy factor.

8. Method according to one of Claims 1 to 7, **characterized in that** the at least one interruption phase (2, 12) extends over equally sized part-sections of the two successive frames (4, 5).

9. Method according to one of Claims 1 to 8, wherein the receiving station interrupts the reception and/or the processing of the data during a plurality of the individual continuous interruption phases, **characterized in that** the interruption phases are distributed in constantly recurring time intervals in at least one higher-level multiframe which comprises a plurality of the frames.

10. Method according to one of Claims 1 to 9, wherein the receiving station interrupts the reception and/or the processing of the data during a plurality of the individual continuous interruption phases (2), **characterized in that** the interruption phases (2) extend recurringly in each case at the same position of one of a number of multiframes which in each case comprise a predetermined number of the frames.

11. Method according to one of Claims 1 to 10, **characterized in that** the transmitting station interrupts the transmission of data in such a manner that no data transmitted by it arrive at the receiving station during the at least one interruption phase (2, 12).

12. Receiving station for carrying out the method according to one of Claims 1 to 11, wherein the receiving station is constructed in such a manner that the reception and/or the processing of data which are transmitted to it structured in frames (1, 4, 5) can be interrupted during one or more interruption phases (2, 12) of the transmission, wherein at least one individual continuous interruption phase (2, 12) extends over at least part-sections of at least two successive frames (4, 5).

13. Transmitting station for carrying out a method according to one of Claims 1 to 11, wherein the transmitting station is constructed in such a manner that data structured into frames (1, 4, 5) can be transmitted in such a manner that a receiving station receiving the data is able to interrupt the reception and/or processing of data during at least one single continuous interruption phase (2, 12) which extends over at least part-sections of at least two successive frames (4, 5).

## Revendications

1. Procédé pour la transmission de données dans un système de communication, en particulier dans un système de télécommunication mobile CDMA, dans lequel les données sont envoyées de façon structurée en trames (1, 4, 5) et dans lequel une station d'émission envoie les données avec des phases d'interruption de telle sorte qu'il soit possible à une station de réception recevant les données, pendant une ou plusieurs de ces phases d'interruption (2, 12) pendant laquelle ou lesquelles elle interrompt la réception et/ou le traitement des données reçues, de remplir d'autres fonctions, en particulier d'effectuer des mesures à l'aide d'un dispositif de réception, **caractérisé en ce qu'**au moins une phase d'interruption continue individuelle (2, 12) s'étend sur au moins des portions d'au moins deux trames successives (4, 5).

2. Procédé selon la revendication 1, **caractérisé en ce que** l'au moins une phase d'interruption (2, 12) s'étend sur la frontière (3) entre une première trame (4) et une deuxième trame (5), des données étant envoyées dans la première trame (4) avant la phase d'interruption (2, 12) et dans la deuxième trame (5) après la phase d'interruption (2, 12).

3. Procédé selon la revendication 1 ou 2, dans lequel les données sont envoyées avec un débit d'émission continu sensiblement constant, **caractérisé en ce qu'**au moins les données reçues directement avant et directement après l'au moins une phase d'interruption (2) sont envoyées à chaque fois à un débit d'émission plus grand que le débit d'émission continu.

4. Procédé selon l'une des revendications 1 à 3, dans lequel les données sont envoyées de façon redondante avec un facteur de redondance standard sensiblement constant, **caractérisé en ce qu'**au moins les données reçues directement avant et directement après l'au moins une phase d'interruption (12) sont envoyées avec un facteur de redondance plus petit que le facteur de redondance standard.

5. Procédé selon la revendication 3 ou 4, **caractérisé en ce que** les données reçues directement avant et directement après l'au moins une phase d'interruption (2) sont envoyées à chaque fois seulement dans les limites d'une trame individuelle (4, 5) au débit d'émission correspondant plus grand et/ou avec le facteur de redondance correspondant plus petit.

6. Procédé selon l'une des revendications 3 à 5, dans lequel les données sont codées sur une plage de recouvrement de durée de recouvrement (T1) prédéterminée sensiblement fixe avec des données à transmettre à chaque fois avant et/ou après et sont envoyées à recouvrement, **caractérisé en ce que** les données reçues directement avant et directement après l'au moins une phase d'interruption (12) sont envoyées pendant moins d'une durée de recouvrement (T1) au débit d'émission correspondant plus grand et/ou avec le facteur de redondance correspondant plus petit.

7. Procédé selon l'une des revendications 3 à 6, **caractérisé en ce que** les données reçues directement avant et directement après l'au moins une phase d'interruption (2, 12) sont envoyées avec le même débit d'émission plus grand et/ou le même facteur de redondance plus petit.

8. Procédé selon l'une des revendications 1 à 7, **caractérisé en ce que** l'au moins une phase d'interruption (2, 12) s'étend sur des portions de même dimension des deux trames successives (4, 5).

9. Procédé selon l'une des revendications 1 à 8, dans lequel la station de réception interrompt la réception et/ou le traitement des données pendant une pluralité de phases d'interruption individuelles continues, **caractérisé en ce que** les phases d'interruption sont réparties à des intervalles de temps uniformes récurrents dans au moins une multitrame supérieure hiérarchiquement, laquelle comporte une pluralité de trames.

10. Procédé selon l'une des revendications 1 à 9, dans lequel la station de réception interrompt la réception et/ou le traitement des données pendant une pluralité de phases d'interruption individuelles continues (2), **caractérisé en ce que** les phases d'interruption (2) s'étendent de façon récurrente à chaque fois à une même position d'une parmi plusieurs multitrames, lesquelles comportent à chaque fois un nombre prédéterminé de trames.

11. Procédé selon l'une des revendications 1 à 10, **caractérisé en ce que** la station d'émission interrompt l'émission de données de telle façon qu'aucune donnée envoyée par celle-ci n'arrive à la station de réception pendant l'au moins une phase d'interruption (2, 12).

12. Station de réception pour la mise en oeuvre du procédé selon l'une des revendications 1 à 11, la station de réception étant conformée de telle sorte que la réception et/ou le traitement de données qui lui sont transmises de façon structurée en trames peut être interrompu pendant une ou plusieurs phases d'interruption (2, 12) de la transmission, au moins une phase d'interruption individuelle continue (2, 12) s'étendant sur au moins des portions d'au moins deux trames successives (4, 5).

13. Station d'émission pour la mise en oeuvre d'un procédé selon l'une des revendications 1 à 11, la station d'émission étant conformée de telle sorte que des données structurées en trames (1, 4, 5) peuvent être envoyées de telle façon qu'il est possible à une station de réception recevant les données d'interrompre la réception et/ou le traitement de données pendant au moins une phase d'interruption individuelle continue (2, 12) qui s'étend sur au moins des portions d'au moins deux trames successives (4, 5).
